# EUROPEAN PATENT SPECIFICATION

(11) **EP 2 083 664 B1**
(45) Date of publication and mention of the grant of the patent: **19.05.2010**
(21) Application number: 07826582.4
(22) Date of filing: 28.09.2007
(51) Int. Cl.: A47J 43/07, A47J 43/08

(54) **MIXING TOOL**
MISCHWERKZEUG
MIXEUR

(30) Priority: 28.09.2006 IT RM20060512
(43) Date of publication of application: 05.08.2009
(73) Proprietor: RONDA S.P.A., 36010 Zanè (VI) (IT)
(72) Inventor: RONDA, Giovanni, 36010 Zanè Vi (IT)
(74) Representative: Locas, Davide
(86) International application number: PCT/IB2007/053953
(87) International publication number: WO 2008/038252

(56) References cited:
- EP-A- 0 570 758
- WO-A-01/30221
- CH-A- 437 694
- DE-A1- 4 033 020
- GB-A- 930 858
- US-A- 3 315 947
- US-A- 4 023 780

## Description

The present invention relates to a mixing tool used in a kitchen to mix ingredients needed for making mixtures or the like and during the cooking of dishes requiring continuous mixing.

As it is known, suchlike tools are already known, and mostly based on a common principle. I.e., they are equipped with a main body and one or two beaters set in rotation by an electric motor.

This implementation principle is used both in simpler tools, which are held and then supported by a user with the beaters immersed in a container holding the ingredients to be mixed, and in more complex products, in which the mixer is fastened to a support base so as to keep it in position with respect to the container.

However, both configurations entail some drawbacks. First of all, in hand mixers, the tool has to be hand-held, with the entailed tiring. Moreover, in order to obtain a homogeneous mixture the user is forced to make rotary motions, as otherwise, by keeping the beaters stationary always in the same position, no homogeneous and well-amalgamated mixture would be obtained.

Moreover, a further drawback lies in that no known tool allows to easily and simply mix also those product parts unavoidably adhering to the container bottom. In order to do this, it is always necessary to use other collecting instruments to amalgamate the mixture, or frequently bring the beaters into contact with the container, risking however to damage both.

A few of these drawbacks have been partly overcome by tools that do not need to be held by the user, in which, as mentioned in the foregoing, the mixer may be "resting" on the rim of a container made for this purpose, so as to have the beaters immersed in the container itself.

However, this typology of tools does not solve the problem of mixture homogeneity, as the beaters are anyhow always stationary in the same position with respect to the container, and generally do not touch the container bottom. To avoid this problem, tools are known in which the container and the mixer are mutually rotating and arranged on different axes. Mixer of this kind are described, e.g., in the European patent EP0570758, in US 3315947, in DE 4033020, or in the international application WO0130221.

These features allow to cover with the beater motion a rather wide surface, yet still insufficient to ensure a perfect mixing of all the product in the container, in particular when said product is rather thick and possilbly adhering to the bottom of the container. Hence, object of the present invention is to solve said problems of the known art, by providing an electric mixer as defined in independent claim 1.

Secondary features of the present invention arc set forth in the corresponding dependent claims thereof.

The main advantage of the tool according to the present invention lies in the fact that it ensures a high homogeneity of the mixture to be mixed, thanks to a particular moving mechanism of the mixing tool. Moreover, the mixing tool is made so as to also ensure that all the product in the container, even that adhering to the bottom thereof, be evenly mixed and kneaded.

Further advantages, as well as the features and the operation modes of the present invention, will be made apparent in the following detailed description of a preferred embodiment thereof, given by way of example and not for limitative purposes, making reference to the figures of the annexed drawings, wherein:
Figure 1 is a perspective view of the tool according to the present invention during use;
Figure 2 is a detail of Figure 1;
Figure 3 is a partially sectional bottom perspective view, illustrating the motion of a mixing tool;

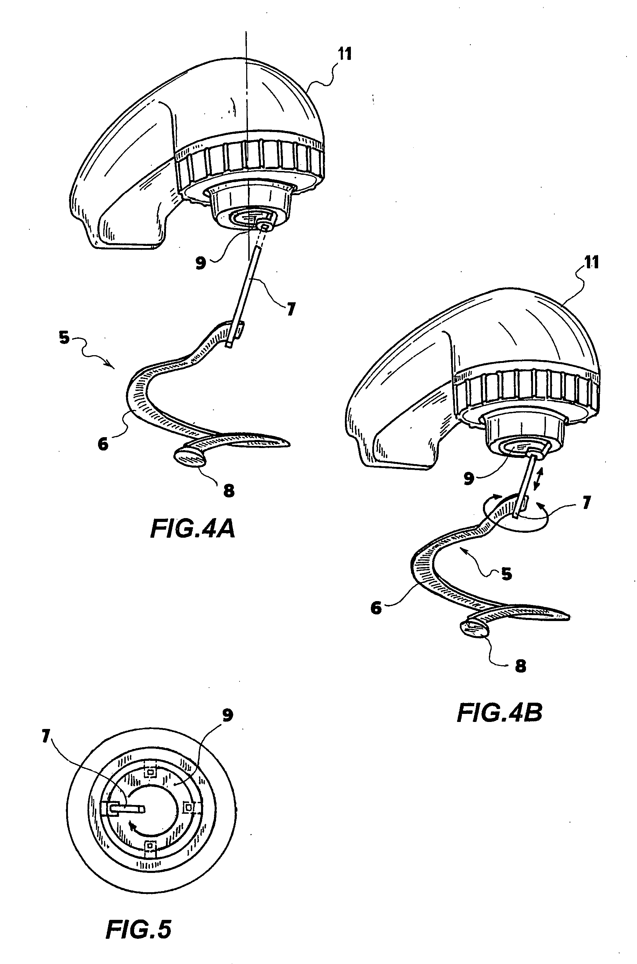

Figures 4A and 4B illustrate one option of motion of the mixing tool; and Figure 5 is a bottom view of a rotation ring nut.

Hereinafter in the present invention, reference will be made to the above-indicated figures.

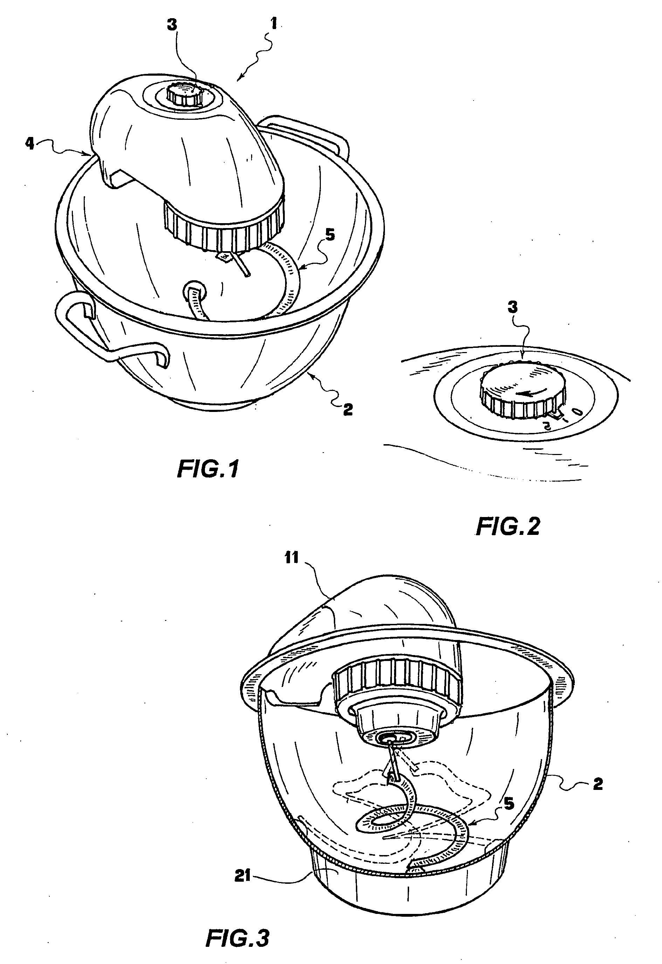

Referring initially to Figure 1, the present invention is aimed at a mixer I used in a kitchen to mix ingredients needed for making mixtures or the like in a container 2 and/or during the cooking of dishes requiring continuous mixing.

The mixer 1 comprises at least one mixing tool 5 that is set in rotation and, during use, is partially immersed in the container 2 holding the ingredients to be mixed.

In the present embodiment the mixing tool is implemented by a beater; however, evidently other typologies of means suitable therefor could be used, such as Archimedean screw or other spiral-shaped tools.

Advantageously, the mixer 1 is made up of a main body 11 comprising positioning means 4 apt to cooperate with a rim of the container 2, in order to keep the mixer 1 in an operative position, with the beater 5 correctly positioned with respect to the container itself.

The beater 5 comprises a rod 7 for connecting to the body of the mixer 1.

The mixer 1 provides a rotation ring nut 9 having a seat apt to receive a free end of the rod 7.

The mixer comprises means for setting in rotation the ring nut 9 and therefore the beater. In particular, the mixer 1 is preferably of electric type, equipped with controls 3 for turning on/off and/or adjusting the speed of rotation of an electric motor (not shown in the figures).

It is also evident that the rotary motion of the beater may be implemented with other equivalent rotation means 9, not illustrated in greater detail as within the reach of a person skilled in the art.

The seat receiving the rod 7 is made so that the rod, once inserted, be tilted with respect to the axis of rotation of the ring nut 9 itself. In particular, said seat is obtained in correspondence of the external peripheral edge of the ring nut 9 and its longitudinal direction is tilted with respect to the axis of rotation of the ring nut 9.

Owing to reasons that will be clearer hereinafter in the description, the rod 7 can freely slide in a longitudinal direction, within predetermined limits, into the seat receiving it. Preferably, holding means is provided apt to prevent the unintentional drawing of the rod off its seat during tool use. Of course, such means, e.g. of release type or the like, do not prevent an intentional drawing of the rod for usual cleaning and/or maintenance operations.

Moreover, inside the seat a thrust spring may be provided, continuously forcing the rod 7 towards the outside of the seat itself.

The beater 5 further comprises a substantially strip-like and spiral-shaped mixing section 6. This section 6 ends in a disc-shaped sliding member 8. Preferably, such a sliding member 8 is made of a material with low friction coefficient, or at least coated with such a material, because, as better explained hereinafter, it is intended to slide on the internal wall of the container 2.

Always according to a preferred embodiment, the sliding member 8 is connected to the section 6 by means of a ball joint, allowing to arrange the sliding member according to any one orientation with respect to the section 6.

As it may be seen in Figure 3, during use the beater 5 in its motion follows a complex path.

First of all, the beater 5 rotates on a longitudinal axis corresponding to the section of rod 7.

Moreover, thanks to the tilt of the rod 7 with respect to the axis of rotation of the ring nut 9, the beater overall describes a cone in space, having the vertex in correspondence of the ring nut.

The sliding member 8 rests on the internal wall of the container 2 and, thanks to the option of the rod 7 to slide longitudinally inside of its seat, remains adhering thereto during all the rotation of the beater 5.

For a greater effectiveness of operation, it is preferable to use the mixer according to the present invention together with a container of specific shape. In particular, the container 2 should have a substantially spherical or anyhow curved (elliptical or the like) bottom region, having an average radius of curvature not exceedingly reduced.

The specific option of motion of the beater 5, linked to the option of sliding in a longitudinal direction within the support seat in the ring nut 9, as well as to the tilted arrangement with respect to the ring nut itself, allows the beater to describe a very wide path, substantially describing a cone with the vertex in correspondence of the ring nut.

The sliding member 8 is always in contact with the internal surface of the container and, at any variation of the radius of curvature, the longitudinal sliding within the seat of the ring nut allows the beater 5 to continue following its own path, retracting or extending from the seat in which it is housed.

Evidently, this entails an enormous advantage in terms of mixing homogeneity. In fact, along its path the beater according to the present invention covers a very wide volume with respect to known beaters, which merely rotate on a vertical axis with respect to the tool itself.

Moreover, the presence of a sliding member, always in contact with the internal surface of the container, warrants an improved mixing of the ingredients.

As mentioned in the foregoing, the mixer according to the present invention may be conveniently used also for food cooking requiring continuous mixing.

For this purpose, the container 2 may have a bottom 21 inside which it is located an electric heating element or other heating means, not illustrated in figure, allowing food cooking.

Moreover, evidently the mixer may also have positioning means 4 such as to allow the fastening thereof to conventional pots and containers, optionally also of a shape different from the spherical one.

In this case, the beater will cover a more limited volume with respect to the use in a spherical-shaped container, though keeping unaltered the feature of contacting the container bottom.

The present invention has been hereto described according to a preferred embodiment thereof, given by way of example and not for limitative purposes.

It is understood that other embodiments might be envisaged, all to be construed as falling within the protective scope thereof, as defined by the appended claims.

## Claims

1. A kitchen mixer (1), comprising a main body (11), having positioning means (4) apt to cooperate with a container (2), in order to keep the mixer in an operative position, and a mixing tool (5) :
- at least partially immersed in the container (2) in said operative position,
- connected to the main body (11) by rotation means (9) apt to rotate on an axis of rotation (A), so as to have a non-nil tilt with respect to said axis of rotation (A); and
- housed in a support seat;
**characterized in that**
■ said mixing tool (5) further comprises a sliding member (8) connected to a free end of a mixing section (6) thereof; and **in that**
■ said mixing tool (5) is arranged to slide longitudinally within said support seat at any variation of the radius of curvature of said container (2), thus allowing said mixing tool (5) to continue following its own path, retracting or extending from said support seat, so that said sliding member (8) is, in use, always in contact with an internal surface of said container (2).

2. The mixer according to claim 1, wherein said rotation means (9) comprises a support seat for the removable housing of said mixing tool (5).

3. The mixer according to claim 2, wherein said rotation means comprises a substantially circle-shaped rotation ring nut (9), and said support seat is positioned in correspondence of an external peripheral edge of said ring nut (9).

4. The mixer according to claim 3, wherein said rotation means comprises an electric motor.

5. The mixer according to one of the preceding claims, wherein said mixing tool (5) comprises a rod (7) for connecting to said rotation means (9), by a support seat.

6. The mixer according to claim 5, wherein said support seat is such that the rod (7), when inserted, be tilted with respect to the axis of rotation (A) of the rotation means itself (9).

7. The mixer according to claim 5 or 6, wherein said rod (7) can slide in a longitudinal direction into said support seat.

8. The mixer according to claim 7, wherein said rod (7) comprises holding means apt to prevent the unintentional drawing of the rod off the support seat during tool use.

9. The mixer according to claim 8, wherein said holding means are of release type or the like.

10. The mixer according to one of the claims 5 to 9, further comprising a thrust spring continuously forcing the rod (7) towards the outside of the support seat.

11. The mixer according to one of the claims 5 to 10, wherein said mixing tool (5) further comprises a substantially strip-like and spiral-shaped mixing section (6), one end of the latter being connected to said rod (7).

12. The mixer according to claim 11, wherein said sliding member (8) is substantially disc-shaped.

13. The mixer according to claim 12, wherein said end sliding member (8) is connected to said free end of said mixing section (6) by a ball joint.

14. The mixer according to claim 12 or 13, wherein said sliding member is made of a material with low friction coefficient.

15. The mixer according to one of the preceding claims, wherein said container (2) comprises heating means apt to carry out food cooking inside of said container (2).

## Patentansprüche

1. Küchenmixer (1), umfassend einen Hauptkörper (11), welcher Positionierungsmittel (4) besitzt, die geeignet sind, mit einem Behälter (2) zusammenzuwirken, um den Mixer in einer betriebsfähigen Position zu halten, und ein Mischwerkzeug (5):
- wenigstens partiell in den Behälter (2) in der genannten betriebsfähigen Position eintauchend,
- mit dem Hauptkörper (11) mittels Rotationsmitteln (9) verbunden, geeignet auf einer Rotationsachse (A) zu rotieren, so dass er eine Neigung, die nicht Null ist, in Bezug auf die genannte Rotationsachse (A) besitzt; und
- aufgenommen in einem Stützsitz;
**dadurch gekennzeichnet, dass**
• das genannte Mischwerkzeug (5) weiterhin ein Gleitelement (8) umfasst, welches mit einem freien Ende eines Mischerbereichs (6) verbunden ist; und **dadurch**, dass
• das genannte Mischwerkzeug (5) derart angeordnet ist, dass es longitudinal innerhalb des genannten Stützsitzes bei jeder Variation des Radius der Krümmung des genanten Behälters (2) gleitet, womit dem genannten Mischwerkzeug (5) gestattet wird, seinen eigenen Weg weiter fortzusetzen, wobei es sich von dem genannten Stützsitz zurückzieht oder dorthin erstreckt, so dass, bei der Benutzung, das genannte Gleitelement (8) immer in Kontakt mit einer inneren Oberfläche des genannten Behälters (2) ist.

2. Mixer gemäß Anspruch 1, worin das genannte Rotationsmittel (9) einen Stützsitz für das entfernbare Gehäuse des genannten Mischwerkzeugs (5) umfasst.

3. Mixer gemäß Anspruch 2, worin das genannte Rotationsmittel eine im Wesentlichen kreisförmige Rotationsringmutter (9) umfasst, und der genannte Stützsitz korrespondierend zu einem externen peripheren Rand der genannten Ringmutter (9) positioniert ist.

4. Mixer gemäß Anspruch 3, worin das genannte Rotationsmittel einen elektrischen Motor umfasst.

5. Mixer gemäß einem der vorangehenden Ansprüche, worin das genannte Mischwerkzeug (5) einen Stab (7) umfasst, um mittels eines Stützsitzes mit dem genannten Rotationsmittel (9) verbunden zu werden.

6. Mixer gemäß Anspruch 5, worin der genannte Stützsitz derart ist, dass die Stange (7), wenn sie eingeführt ist, in Bezug auf die Rotationsachse (A) des Rotationsmittels (9) selbst geneigt werden kann.

7. Mixer gemäß Anspruch 5 oder 6, worin die genannte Stange (7) in einer longitudinalen Richtung in den genannten Stützsitz hinein gleiten kann.

8. Mixer gemäß Anspruch 7, worin die genannte Stange (7) Haltemittel umfasst, welche geeignet sind, das unbeabsichtigte Herausziehen der Stange aus dem Stützsitz während der Verwendung des Werkzeugs zu verhindern.

9. Mixer gemäß Anspruch 8, worin die genannten Haltemittel vom Auslösetyp oder dergleichen sind.

10. Mixer gemäß einem der Ansprüche 5 bis 9, welcher weiterhin eine Schubfeder umfasst, die kontinuierlich die Stange (7) in Richtung auf die Außenseite des Stützsitzes zwingt.

11. Mixer gemäß einem der Ansprüche 5 bis 10, worin das genannte Mischwerkzeug (5) weiterhin einen im Wesentlichen streifenartigen und spiralförmigen Mischerbereich (6) umfasst, wobei ein Ende des Letzteren mit der genannten Stange (7) verbunden ist.

12. Mixer gemäß Anspruch 11, worin das genannte Gleitelement (8) im Wesentlichen scheibenförmig ist.

13. Mixer gemäß Anspruch 12, worin das genannte Ende des Gleitelements (8) mit dem genannten freien Ende des genannten Mischerbereichs (6) mittels eines Kugelgelenks verbunden ist.

14. Mixer gemäß Anspruch 12 oder 13, worin das genannte Gleitelement aus einem Material mit geringem Reibungskoeffizient hergestellt ist.

15. Mixer gemäß einem der vorangehenden Ansprüche, worin der genannte Behälter (2) ein Heizmittel umfasst, welches geeignet ist, das Kochen von Lebensmitteln innerhalb des genannten Behälters (2) durchzuführen.

## Revendications

1. Mixeur de cuisine (1), comprenant un corps principal (11), ayant des moyens de positionnement (4) aptes à coopérer avec un récipient (2), afin de maintenir le mixeur dans une position opérationnelle, et un outil de mélange (5) :
- au moins partiellement immergé dans le récipient (2) dans ladite position opérationnelle,
- relié au corps principal (11) par des moyens de rotation (9) aptes à tourner sur un axe de rotation (A), de sorte à avoir une inclinaison non nulle par rapport audit axe de rotation (A) ; et
- logé dans un logement de support ;
**caractérisé en ce que**
ledit outil de mélange (5) comprend en outre un élément coulissant (8) relié à une extrémité libre d'une section de mélange (6) de celui-ci ; et **en ce que**
ledit outil de mélange (5) est conçu pour coulisser longitudinalement à l'intérieur dudit logement de support à chaque variation du rayon de courbure dudit récipient (2), permettant ainsi audit outil de mélange (5) de poursuivre sa propre trajectoire, de rentrer ou de sortir par rapport audit logement de support, de sorte que ledit élément coulissant (8) soit, pendant l'utilisation, toujours en contact avec une surface interne dudit récipient (2).

2. Mixeur selon la revendication 1, dans lequel lesdits moyens de rotation (9) comprennent un logement de support pour recevoir de manière amovible ledit outil de mélange (5).

3. Mixeur selon la revendication 2, dans lequel lesdits moyens de rotation comprennent un écrou annulaire de rotation sensiblement en forme de cercle (9), et ledit logement de support est positionné en correspondance d'un bord périphérique externe dudit écrou annulaire (9).

4. Mixeur selon la revendication 3, dans lequel lesdits moyens de rotation comprennent un moteur électrique.

5. Mixeur selon une des revendications précédentes, dans lequel ledit outil de mélange (5) comprend une tige (7) pour connexion auxdits moyens de rotation (9), par un logement de support.

6. Mixeur selon la revendication 5, dans lequel ledit logement de support est tel que la tige (7), lorsqu'elle est insérée, est inclinée par rapport à l'axe de rotation (A) des moyens de rotation eux-mêmes (9).

7. Mixeur selon la revendication 5 ou 6, dans lequel ladite tige (7) peut coulisser dans une direction longitudinale dans ledit logement de support.

8. Mixeur selon la revendication 7, dans lequel ladite tige (7) comprend des moyens de maintien aptes à empêcher le retrait involontaire de la tige hors du logement de support pendant l'utilisation de l'outil.

9. Mixeur selon la revendication 9, dans lequel lesdits moyens de maintien sont d'un type à libération ou similaire.

10. Mixeur selon une des revendications 5 à 9, comprenant en outre un ressort de poussée forçant en continu la tige (7) vers l'extérieur du siège de support.

11. Mixeur selon une des revendications 5 à 10, dans lequel ledit outil de mélange (5) comprend en outre une section de mélange sensiblement en forme de bande ou en forme de spirale (6), une extrémité de cette dernière étant reliée à ladite tige (7).

12. Mixeur selon la revendication 11, dans lequel ledit élément coulissant (8) est sensiblement en forme de disque.

13. Mixeur selon la revendication 12, dans lequel ledit élément coulissant d'extrémité (8) est relié à ladite extrémité libre de ladite section de mélange (6) par un joint à rotule.

14. Mixeur selon la revendication 12 ou 13, dans lequel ledit élément coulissant est constitué d'un matériau ayant un faible coefficient de frottement.

15. Mixeur selon une des revendications précédentes, dans lequel ledit récipient (2) comprend des moyens de chauffage aptes à assurer la cuisson d'aliments à l'intérieur dudit récipient (2).
